(19) Europäisches Patentamt
European Patent Office
Office européen des brevets

(11) EP 1 574 536 A1

(12) # EUROPEAN PATENT APPLICATION

(43) Date of publication:
14.09.2005 Bulletin 2005/37

(51) Int Cl.[7]: **C08G 18/10**, C08G 18/42, D21F 3/02

(21) Application number: **05004917.0**

(22) Date of filing: **07.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **08.03.2004 JP 2004063467**
**16.02.2005 JP 2005039213**

(71) Applicant: **ICHIKAWA CO.,LTD.**
**Tokyo (JP)**

(72) Inventor: **Watanabe, Kazumasa**
**Tokyo (JP)**

(74) Representative: **Zimmermann, Gerd Heinrich et al**
**Zimmermann & Partner,**
**P.O. Box 33 09 20**
**80069 München (DE)**

(54) **Papermaking machine belt and method for producing the same**

(57) The invention provides a papermaking machine belt (10) comprising a polyurethane (20) and a substrate (30), wherein the polyurethane (20) is obtained by curing an isocyanate group-terminated urethane prepoylymer with a hardener, the urethane prepolymer being a reaction product of (1) a phthalic acid polyester polyol represented by the following formula (I):

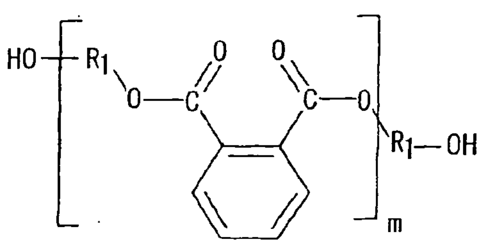

(I)

wherein $R_1$ is a bivalent group selected from the group consisting of (a) an alkylene group having 2 to 6 carbon atoms, and (b) a group represented by the following formula (II):

$$-(R_2O)_n-R_2- \quad \text{(II)}$$

wherein $R_2$ is an alkylene group having 2 or 3 carbon atoms, and n is an integer of 1 to 3; and m is from 1 to 15, and (2) a diisocyanate.

EP 1 574 536 A1

FIG. 1

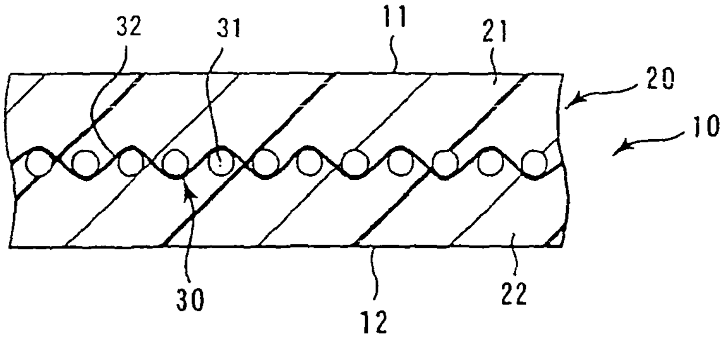

## Description

The present invention relates to a papermaking machine belt (hereinafter occasionally simply referred to as a "belt") and a method for producing a papermaking machine belt.

In a papermaking plant, a papermaking machine belt comprising a substrate and a polyurethane is used in each papermaking process. That is, a shoe press belt and a transfer belt are used in a press part of the papermaking process, and a soft calender belt is used in a calender part.

These belts are basically composed of: a substrate comprising woven fabric or the like for expressing the strength of the whole belt; and a polyurethane laminated on both sides or one side of the substrate. In order to produce such a belt, steps of coating and impregnating the substrate with a liquid urethane prepolymer and curing it with a hardener are employed.

As for a method for producing the polyurethane, a diisocyanate having two isocyanate groups at terminal ends thereof and a polyol having a plurality of hydroxyl groups at terminal ends thereof are subjected to polyaddition reaction to produce an isocyanate group-terminated urethane prepolymer. The liquid urethane prepolymer thus obtained is a low-molecular weight compound, and is then cured by adding a hardener (chain extender) thereto and heating to obtain a solid high-molecular weight polyurethane.

As for the polyurethane for papermaking machine belts, various polyurethanes are appropriately used depending on the part to be used, such as the press part of the papermaking process, and the intended application. However, in either case, it travels at high speed on rolls, and also receives strong pressure between the rolls. Accordingly, high physical properties are required. In particular, with recent increased running speed of a paper machine caused by improvement of paper productivity and increased pressure of the press part, the use environment thereof has recently become increasingly harsh. Higher-level performance is required for the belt used in such a high-performance papermaking machine. In general, physical properties such as abrasion resistance, permanent deformation resistance, crack resistance and compression fatigue resistance are required for the papermaking machine belt.

The constitution of such a papermaking machine belt includes, as shown in Fig. 1, one comprising a substrate 30 and a polyurethane 20 having a felt-side resin 21 which is to be in contact with wet paper or paper and a shoe-side resin 22 which is to be in contact with the papermaking machine such as a shoe, in which the substrate 30 is laminated between the resin 21 and the resin 22. In particular, a papermaking machine belt having the constitution as shown in Fig. 6 is suitably used in which the polyurethane and the substrate are integrated with each other, the substrate is completely embedded in the polyurethane, and moreover, drainage grooves are formed on the surface of the felt-side resin 21 (outer peripheral surface of the belt) acting on wet paper or a paper material. In such a papermaking machine belt, cracks are liable to occur on edges of convex portions (top portions) of the drainage grooves or on ends of bottoms of the grooves, because of the harsh use environment as described above. Even cracks which have slightly occurred gradually grow to large cracks with operation, finally resulting in cracks into the inside of the belt. As a result, the life of the belt is significantly impaired, which causes a problem.

As described above, the polyurethane is produced from the three kinds of raw materials, the diisocyanate, the polyol and the hardener, and each comprises a several number of compounds. Accordingly, various polyurethanes different in physical properties can be obtained depending on combinations thereof, so that the high-performance polyurethanes suitable for their use can be produced by selecting the above-mentioned respective raw materials. From this viewpoint, various polyurethanes have been proposed also for polyurethanes for the papermaking machine belt (see, for example, patent document 1), but still it is not said to be sufficient for the above-mentioned required physical properties.

Patent Document 1: WO 02/04536 A2

The present invention intends to lessen or overcome the drawbacks of the prior art products.

This problem is solved by the papermaking machine belt according to independent claim 1 and the method for producing a papermaking machine belt according to independent claim 3.

Further aspects, features, advantages and details of the invention become evident from the dependent claims, the description and the accompanying drawings.

The present invention relates particularly to a belt excellent in physical properties such as crack resistance, abrasion resistance and permanent deformation resistance, which is produced using a specific polyol material as a polyurethane constituting the belt, and also relates to a method for producing the same.

In order to solve the above-mentioned problem, in the invention, attention has been paid particularly to a polyol component, and it has been discovered that a belt which is improved in physical properties such as crack resistance, abrasion resistance and permanent deformation resistance and suitable for the papermaking machine belt is obtained by using a specific phthalic acid polyester polyol as the polyol, and using a polyurethane obtained by curing a urethane prepolymer, which is a reaction product of the polyol and a diisocyanate, with a hardener.

That is, the invention provides a papermaking machine belt comprising a polyurethane and a substrate, wherein the polyurethane is one obtained by curing an isocyanate group-terminated urethane prepolymer with a hardener, the urethane prepolymer being a reaction product of

(1) a phthalic acid polyester polyol represented by the following formula (I):

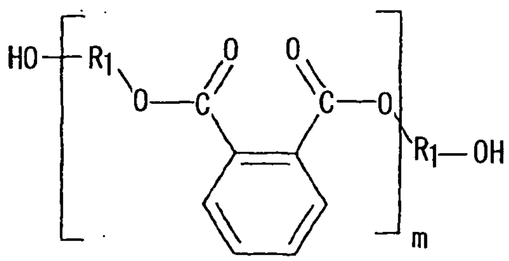

(I)

wherein $R_1$ is a bivalent group selected from the group consisting of

(a) an alkylene group having 2 to 6 carbon atoms, and
(b) a group represented by the following formula (II):

$$-(R_2O)_n-R_2- \quad \text{(II)}$$

wherein $R_2$ is an alkylene group having 2 or 3 carbon atoms, and n is an integer of 1 to 3; and m is from 1 to 15, and
(2) a diisocyanate.

Further, the papermaking machine belt of the invention can be produced by a process comprising the steps of:

coating a substrate with a mixture of a isocyanate group-terminated urethane prepolymer and a hardener, and curing the urethane prepolymer,

wherein the urethane prepolymer being a reaction product of

(1) a phthalic acid polyester polyol represented by the following formula (I):

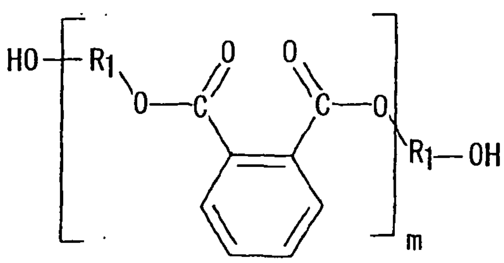

(I)

wherein $R_1$ and m have the same meanings as described above, and
(2) diisocyanate.

According to the invention, by using the above-mentioned phthalic acid polyester polyol as the polyol to react with the diisocyanate in the production of the urethane prepolymer, there is provided a papermaking machine belt more excellent in crack resistance, abrasion resistance, permanent deformation resistance and the like than conventional ones.

The invention will be better understood by reference to the following description of embodiments of the invention taken in conjunction with the accompanying drawings, wherein

Fig. 1 is a schematic view illustrating the constitution of an example of the papermaking machine belt of the invention;
Fig. 2 is a schematic view illustrating a step for producing the papermaking machine belt of the invention;
Fig. 3 is a schematic view illustrating a step for producing the papermaking machine belt of the invention;
Fig. 4 is a schematic view illustrating a crack resistance test apparatus;
Fig. 5 is a schematic view illustrating an abrasion resistance test apparatus; and
Fig. 6 is a schematic view illustrating the constitution of another example of the papermaking machine belt of the invention, on which drainage grooves are formed.

The reference numerals used in the drawings denote the followings, respectively.

4: Drainage groove
10: Belt
11: Outer peripheral surface
12: Inner peripheral surface
20: Polyurethane
21: Felt-Side Resin
22: Shoe-Side Resin
30: Substrate
31: Yarn Material in MD Direction
32: Yarn Material in CMD Direction
40, 41: Rolls
42: Resin Coating Nozzle
43: Heat Source
51: Test Piece
52: Clamp Hand
53: Rotating Roll
54: Press Shoe
55: Press Board
56: Rotating Roll
57: Friction Unit

In the invention, the phthalic acid polyester polyol used as the polyol component is represented by the following formula (I):

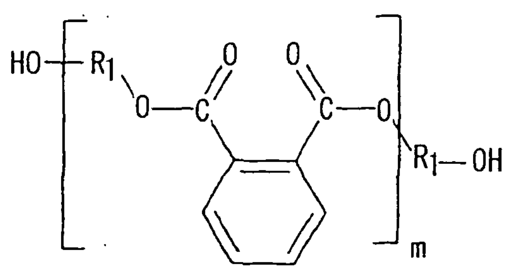

(I)

wherein $R_1$ is a bivalent group selected from

(a) an alkylene group having 2 to 6 carbon atoms, and
(b) a group represented by the following formula (II) :

$$-(R_2O)_n-R_2-$$

wherein $R_2$ is an alkylene group having 2 or 3 carbon atoms, and n is an integer of 1 to 3, preferably 1 to 2; and m is from 1 to 15, preferably 1 to 4.

In the production of a polyurethane, a polyol which is a raw material for forming a urethane prepolymer by reacting it with an isocyanate includes a polyether polyol and a polyester polyol. The polyol for use in the invention is

a phthalic acid polyester polyol obtained from phthalic acid or phthalic anhydride and an alkylene glycol or a polyalkylene glycol.

In formula (1), $R_1$ is selected from the following two groups:

(a) An alkylene group having 2 to 6 carbon atoms, and
(b) A group represented by the following formula (II) :

$$-(R_2O)_n-R_2- \quad (II)$$

wherein $R_2$ is an alkylene group having 2 or 3 carbon atoms, and n is an integer of 1 to 3.

$R_1$ classified as the above (a) is an alkylene group having 2 to 6 carbon atoms, and the phthalic acid polyester polyol of formula (I) in this case is a polyester polyol formed by condensation of phthalic acid or phthalic anhydride with an alkylene glycol (not a polymer) such as ethylene glycol or propylene glycol.

On the other hand, $R_1$ classified as the above (b) is a polyalkylene glycol group (the degree of polymerization: 2 to 4) such as polyethylene glycol.

The phthalic acid polyester polyol of formula (I) can be easily produced by the reaction of phthalic acid or phthalic anhydride with an alkylene glycol or polyalkylene glycol represented by the following formula (III):

$$HO-R_1-OH \quad (III)$$

wherein $R_1$ is either of (a) and (b) similarly to the definition in the above-mentioned formula (I).

Examples of $HO-R_1-OH$ when $R_1$ is (a), that is, the alkylene glycol, include ethylene glycol, propylene glycol, trimethylene glycol, butylene glycol, 1,6-hexanediol and the like.

Further, examples of $HO-R_1-OH$ when $R_1$ is (b), that is, the polyalkylene glycol, include polyethylene glycol, polypropylene glycol and the like.

Examples of the phthalic acid polyester polyols of formula (I) obtained from these diols represented by formula (III) and phthalic acid or phthalic anhydride include ethylene glycol phthalate, propylene glycol phthalate, hexanediol phthalate, diethylene glycol phthalate and the like.

These phthalic acid polyester polyols are disclosed in PCT International Publication No. WO 02/04536 A2, and available as "Stepan PS4002", "Stepan PH56", etc. manufactured by Stepan Company, USA.

The degree of polymerization (m in formula (I)) of the phthalic acid polyester polyol used in the invention is from 1 to 15, and the molecular weight thereof is from 250 to 10,000 and preferably from 400 to 2,500, although it varies depending on the kind of polyol used.

The above-mentioned reaction of the phthalic acid or phthalic anhydride with the alkylene glycol or polyalkylene glycol is usually conducted at a temperature of 200 to 230°C. It is desirable that the ratio of raw material phthalic acid or phthalic anhydride to the polyol is approximately the equivalent. Although the reaction can be conducted in the absence of a catalyst, it may be conducted in the presence of a catalyst, for example, an organotin compound.

The above-mentioned various polyols can be used either singly or as a mixture of two or more thereof. For example, as component (1) for use in the present invention, a mixed phthalic acid polyester polyol obtained by polycondensation of a mixture of polyalkylene glycols varying in the degree of polymerization with phthalic anhydride can be used.

In the invention, the phthalic acid polyester polyol represented by formula (I) is an indispensable component as the polyol component to react with the diisocyanate component (2). However, another polyol can also be further added and used in combination. The second polyol components include, for example, polyether polyols such as polyethylene glycol, polypropylene glycol and polytetramethylene glycol, and polyester polyols such as a polycaprolactone ester, a polycarbonate, polyethylene adipate, polybutylene adipate and polyhexene adipate.

When a mixture of two kinds of polyols is used, the amount ratio thereof may be any as long as the phthalic acid polyester polyol of formula (I) is contained as the indispensable component. However, the amount of the phthalic acid polyester polyol of formula (I) contained in the mixture of polyols is preferably 50% by weight or higher.

As the diisocyanates, there can be used any diisocyanates commonly known as raw materials for polyurethanes, such as tolylene diisocyanate (TDI), diphenylmethane diisocyanate (MDI), m-xylene diisocyanate and naphthalene diisocyanate. TDI and MDI are particularly preferred. MDI includes various isomers, and among them, the 4,4' isomer is most preferred.

In the reaction of producing an urethane prepolymer from the phthalic acid polyester polyol and the diisocyanate, the mixing ratio of these components is adjusted so that the isocyanate group/OH group equivalent ratio is

within the range of 1.3/1 to 4/1, preferably 1.4/1 to 1.6/1.

The reaction temperature is usually from 30°C to 120°C, and preferably from 50°C to 110°C.

Since the reaction product contains unreacted diisocyanate and a solvent, they are removed by distillation. The prepolymer is obtained as a distillation residue.

The prepolymer thus obtained is generally low in viscosity, and hence is subjected to chain extension with a hardener (chain extender), thereby obtaining a high-molecular weight polyurethane. On the occasion of producing the papermaking machine belt of the invention comprising the polyurethane and the substrate, the belt substrate such as a woven fabric is impregnated with a mixture of the urethane prepolymer and the hardener, followed by heating and curing to obtain a belt in which both sides of the substrate are impregnated and laminated with the polyurethane resin, as shown in Fig. 1.

In Fig. 1, the belt 10 comprises a substrate 30 for imparting strength and a polyurethane 20. The polyurethane 20 includes a felt-side resin 21 which is to be in contact with wet paper or paper and a shoe-side resin 22 which is to be in contact with the papermaking machine such as a shoe, and the substrate 30 is laminated between the resin 21 and the resin 22. In Fig. 1, a woven fabric woven with a yarn material 31 in the MD direction and a yarn material 32 in the CMD direction is used as the substrate 30. Besides this constitution, the substrate may be one in which these yarn materials are laminated without being woven, a film, a knitted fabric, one composed by a narrow strip that is spirally wound, or the like. It is preferred that the papermaking machine belt of the invention has a constitution in which drainage grooves are formed on the surface of the felt-side resin 21 (outer peripheral surface of the belt). The papermaking machine belts having such a constitution include, for example, one shown in Fig. 6. The shape of the drainage grooves is not limited to the shape shown in Fig. 6, and as other shapes of the drainage grooves, there can be appropriately employed one in which groove side walls are curved, one in which they are expanded outward, one in which groove bottoms are flat and edges thereof are curved, one in which groove bottoms are round, and the like, as shown in papermaking machine belts described in US Patent 6,296,738B and Japanese Utility Model No. 3,104,830.

As the method for laminating the polyurethane resin on both sides of the substrate, there is used, for example, a known method comprising fitting the substrate 30 over rolls 40 and 41 as shown in Fig. 2, first applying onto the substrate the urethane prepolymer that serves as the shoe-side resin 22, while rotating the rolls, then reversing the inner and outer sides of the substrate after the shoe-side resin 22 has been dried and solidified, further applying onto the substrate the urethane prepolymer that serves as the felt-side resin 21, and then performing heat curing after the felt-side resin 21 has been dried and solidified.

As the hardener, water, an aliphatic diol, an aromatic diamine or the like can be used.

The aliphatic diol includes 1,4-butanediol, 1,3-propanediol, 1,6-hexanediol and the like.

The diamine-based hardener includes dimethylthiotoluenediamine (DMTDA), methylenebisorthochloroaniline (MBOCA), for example, 3,3'-dichloro-4,4'-diaminodiphenylmethane, and the like.

Although there is no particular limitation on the hardener for use in the invention, the diamine-based hardeners, particularly DMTDA and MBOCA, are preferred. Dimethylthiotoluenediamine includes various isomers depending on the substitution positions of the dimethylthio group and the amino group. These isomers can be used in the form of a mixture thereof. Such a mixture is available as ETHACURE 300 (trade name) manufactured by Albemarle Company.

The urethane prepolymer is desirably mixed with the hardener at such a mixing ratio that the equivalent ratio of active hydrogen groups of the hardener to isocyanate groups of the urethane prepolymer becomes 0.9 to 1.10.

Curing reaction using the hardener can be conducted by a known method. It is preferred that the curing reaction is conducted preliminarily at a temperature of 10 to 60°C to reduce the fluidity of the laminated polyurethane resin, followed by reaction at 100 to 150°C (usually for at least 30 minutes) to cure the laminated polyurethane resin.

## EXAMPLES

The present invention will be illustrated in greater detail with reference to the following Examples and Comparative Examples, but the invention should not be construed as being limited thereto.

### Example 1

<u>Production of Polyurethane Prepolymer</u>

A phthalic acid polyester polyol (Stepan PS4002 manufactured by Stepan Company, USA, molecular weight: about 400) obtained by polycondensation of phthalic anhydride with diethylene glycol was mixed with TDI so as to give an NCO/OH equivalent ratio of 4/1. The mixture was charged into a reaction vessel the inside of which had been replaced with nitrogen, and allowed to react with stirring at 50°C for 3 hours. Unreacted TDI was removed by distillation from the reaction product, and then, the residue is filtered to obtain a liquid urethane prepolymer.

Addition of Hardener

DMTDA (ETHACURE 300 manufactured by Albemarle Company (a 80 parts/20parts mixture of 3,5-dimethylthio-2,4-toluenediamine/3,5-dimethylthio-2,6-toluenediamine)) was prepared, and mixed with the urethane prepolymer obtained in the above-mentioned step so as to give an H/NCO equivalent ratio of 0.97.

Coating of Prepolymer

As shown in Fig. 2, a substrate 30 was fitted over rolls 40 and 41, and the urethane prepolymer serving as a shoe-side resin 22 was first applied onto the substrate 30 from a resin coating nozzle 42 while rotating the rolls, and the shoe-side resin 22 was dried and solidified. Next, the inner and outer sides of the substrate were reversed, and the urethane prepolymer serving as a felt-side resin 21 was applied onto the opposite side. Then, the urethane prepolymer was preliminarily heated at 10 to 60°C, and dried and solidified.

Curing

Thus, with respect to the belt fitted over the rolls 40 and 41 as shown in Fig. 3 in which both sides (shoe side and felt side) of the substrate 30 have been impregnated with the urethane prepolymers 22 and 21, reaction was conducted by means of a heat source 43 mounted above the belt at 100°C for 3 hours, followed by subsequent heating at 130°C for 5 hours to thereby perform curing.

Groove Processing

After the polyurethane cured, the surface of the belt were ground, and further, rectangular grooves as drainage grooves having the dimension of 1 mm in width and 1 mm in depth at a pitch of 2.5 mm were cut on the outer peripheral surface thereof, i.e., on the felt-side resin 21, to obtain a belt sample having a belt thickness of 5 mm and comprising the polyurethane and the substrate.

Examples 2 to 6

Belt samples were prepared in the same manner as in Example 1 with the exception that the raw materials for producing the polyurethane such as the polyol, isocyanate and hardener, were replaced with those shown in Table 1.

Table 1

| | Raw Material | | | Physical Properties of Belt | | | |
|---|---|---|---|---|---|---|---|
| | Polyol | Isocyanate | Hardener | Cycles Until Occurrence of Crack (10,000 cycles) | Abrasion Resistance (mm) | Permanent Deformation (%) | Overall Evaluation |
| Example 1 | PS4002 | TDI | DMTDA | >30 | 0.05> | 3.0 | 1 |
| Example 2 | PS4002 | TDI | MBOCA | 25 to 30 | 0.05> | 3.0 | 2 |
| Example 3 | PH56 | TDI | DMTDA | >30 | 0.05> | 3.0 | 1 |
| Example 4 | PH56 | TDI | MBOCA | 25 to 30 | 0.05> | 3.0 | 2 |
| Example 5 | PS4002 | MDI | DMTDA | 25 to 30 | 0.1 | 3.5 | 3 |
| Example 6 | PH56 | MDI | MBOCA | 20 to 25 | 0.1 | 3.5 | 3 |
| Comparative Example 1 | PTMG | TDI | DMTDA | 15 to 20 | 0.45 | 4.0 | 4 |
| Comparative Example 2 | PTMG | MDI | DMTDA | 10 to 15 | 0.65 | 5.0 | 5 |
| Comparative Example 3 | PEAG | TDI | MBOCA | 10 to 15 | 0.9 | 5.0 | 5 |
| Comparative Example 4 | PEAG | MDI | MBOCA | 10 to 15 | >1 | >5.0 | 6 |

PS4002: Diethylene glycol phthalate (a phthalic acid polyester polyol obtained by polycondensation of phthalic anhydride with diethylene glycol)
PH56: Hexanediol phthalate (a phthalic acid polyester polyol obtained by polycondensation of phthalic anhydride with hexanediol)
TDI: Tolylene diisocyanate
MDI: Diphenylmethane diisocyanate
DMTDA: Dimethylthiotoluenediamine
MBOCA: 4,4'-methylenebis-(2-chloroaniline)

Comparative Examples 1 to 4

Belt samples were prepared in the same manner as in Example 1 with the exception that various polyols shown in Table 1, which are used in conventional methods, were used.

Evaluation of Physical Properties

The physical properties of the resulting belt samples were measured. The measuring methods of the physical properties are as follows.

(1) Crack:

Measurements were made using an apparatus shown in Fig. 4. A test piece 51 is held tight with clamp hands 52 and 52 at both ends thereof, and the clamp hands 52 and 52 are constituted so as to be laterally reciprocally movable in conjunction with each other. The tension applied to the test piece 51 is 3 kg/cm, and the reciprocating speed is 40 cm/second.

Further, the test piece 51 is put between a rotating roll 53 and a press shoe 54, and pressurized at 36 kg/$cm^2$ by moving the press shoe toward the rotating roll.

Using this apparatus, the test piece was repeatedly reciprocated, and the number of reciprocating cycles until a crack occurred on the surface of the test piece 51 on the rotating roll side was measured.

(2) Abrasion Resistance:

Measurements were made using an apparatus shown in Fig. 5. In Fig. 5, a test piece 51 is attached to a lower part of a press board 55, and the lower surface thereof (a surface to be measured) is pressed in contact with a rotating roll 56. A friction unit 57 is provided on the periphery of the rotating roll 56. Contact friction with the rotating roll under pressure was performed at a pressure of 6 kg/cm at a rotating speed of the rotating roll of 100 m/minute for 10 minutes, and a decrease in the thickness of the test piece 51 after the test was measured.

(3) Permanent Deformation:

A test piece was pressurized at 80 kg/$cm^2$ from the side of a surface thereof to be measured, under the conditions of a compression time of 22 hours and a temperature of 70°C, and the thickness thereof was measured 30 minutes after release of the pressure.

The permanent deformation (%) was determined from measured values of the thickness (to) before compression and the thickness (t) after compression by the following equation:

$$[ (t_0-t)/t_0]\times 100\ (\%)$$

The test results of the above-mentioned three kinds of physical properties and the overall evaluation are shown together in Table 1.

As is apparent from the results of Table 1, the papermaking machine belts obtained in Examples according to the invention using the phthalic acid polyester polyol as the polyol for the production of the urethane prepolymer are good in each of crack resistance, abrasion resistance and permanent deformation resistance, compared to the belts obtained using PTMG or PEAG as the diol according to the conventional methods. Particularly, the invention Examples are remarkably excellent in abrasion resistance.

According to the invention, there is provided a papermaking machine belt more excellent in crack resistance, abrasion resistance, permanent deformation resistance and the like than those which have hitherto been used, and thus the durability is improved. Accordingly, quality improvement of products and cost reduction due to productivity improvement in the papermaking process are expected.

While the present invention has been described in detail and with reference to specific embodiments thereof, it will be apparent to one skilled in the art that various changes and modifications can be made therein without departing from the spirit and scope thereof.

The present application is based on Japanese Patent Application Nos. 2004-063467 (filed March 8, 2004) and 2005-39213 (filed February 16, 2005), the contents thereof being herein incorporated by reference.

## Claims

1. A papermaking machine belt (10) comprising a polyurethane (20) and a substrate (30), wherein the polyurethane (20) is obtained by curing an isocyanate group-terminated urethane prepolymer with a hardener, the urethane prepolymer being a reaction product of

   (1) a phthalic acid polyester polyol represented by the following formula (I):

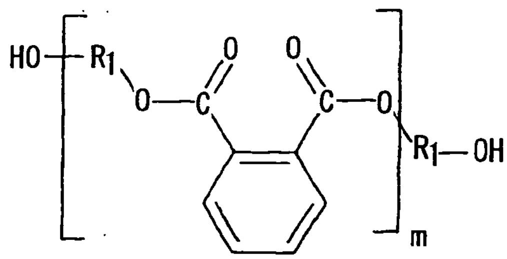

(I)

   wherein $R_1$ is a bivalent group selected from the group consisting of

   (a) an alkylene group having 2 to 6 carbon atoms, and
   (b) a group represented by the following formula (II) :

$$-(R_2O)_n-R_2- \quad (II)$$

   wherein $R_2$ is an alkylene group having 2 or 3 carbon atoms, and n is an integer of 1 to 3; and m is from 1 to 15, and
   (2) a diisocyanate.

2. The papermaking machine belt (10) according to claim 1, wherein the hardener is dimethylthiotoluenediamine (DMTDA) or methylenebisorthochloroaniline (MBOCA).

3. A method for producing a papermaking machine belt (10) comprising the steps of:

   coating a substrate (30) with a mixture of an isocyanate group-terminated urethane prepolymer and a hardener; and
   curing the urethane prepolymer,

   wherein the urethane prepolymer is a reaction product of

   (1) a phthalic acid polyester polyol represented by the following formula (I):

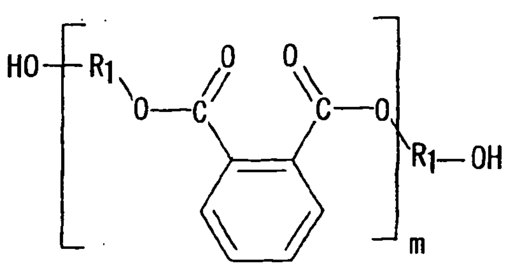

(I)

   wherein $R_1$ is a bivalent group selected from the group consisting of

(a) an alkylene group having 2 to 6 carbon atoms, and
(b) a group represented by the following formula (II) :

$$-(R_2O)_n-R_2- \qquad (II)$$

wherein $R_2$ is an alkylene group having 2 or 3 carbon atoms, and n is an integer of 1 to 3; and m is from 1 to 15, and
(2) diisocyanate.

**4.** The method for producing a papermaking machine belt (10) according to claim 3, wherein the hardener is dimethylthiotoluenediamine (DMTDA) or methylenebisorthochloroaniline (MBOCA).

**5.** The method for producing a papermaking machine belt (10) according to claim 3 or 4, wherein the hardener is mixed with the urethane prepolymer so as to give an equivalent ratio (H/NCO) of active hydrogen groups of the hardener to isocyanate groups of the urethane prepolymer of from 0.9 to 1.1, and then the urethane prepolymer is cured.

**6.** The method for producing a papermaking machine belt (10) according to any one of claims 3 to 5, wherein after the urethane prepolymer and the hardener are mixed, these components are preliminarily allowed to react with each other at a temperature of 10 to 60°C, and further allowed to react with each other at a temperature of 100 to 150°C to cure the urethane prepolymer.

FIG. 1

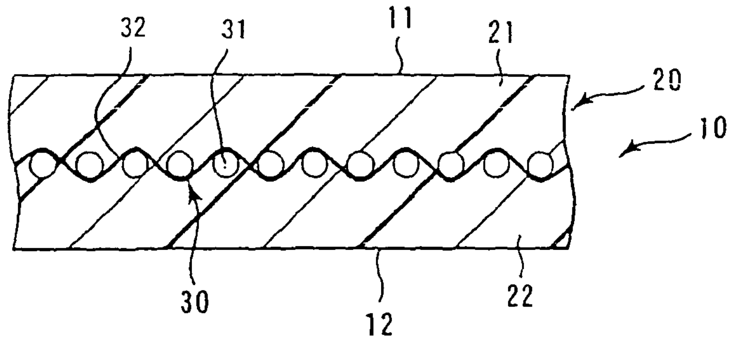


FIG. 2

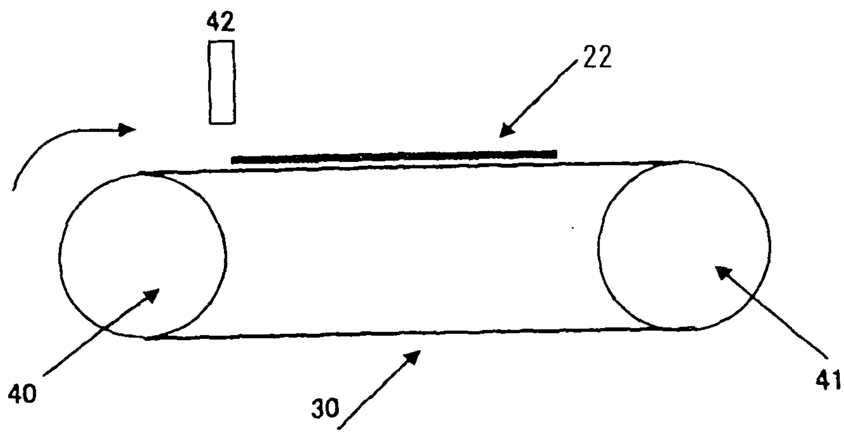


FIG. 3

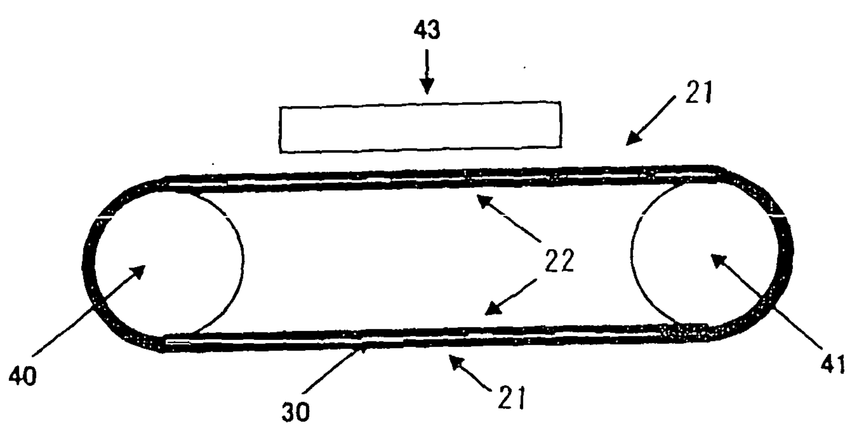

FIG. 4

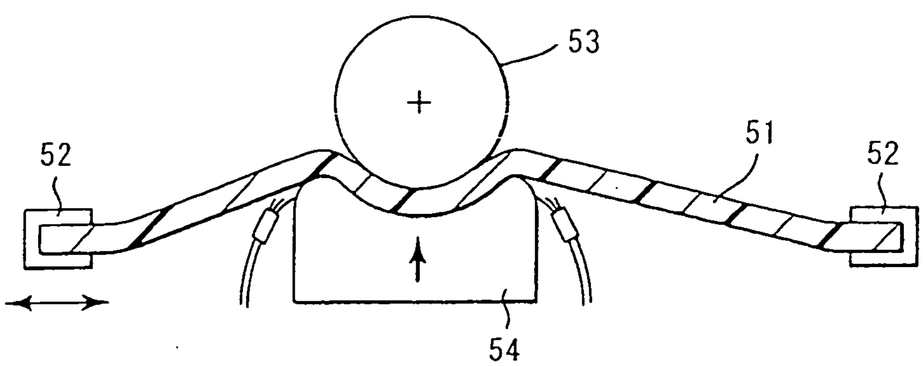


FIG. 5

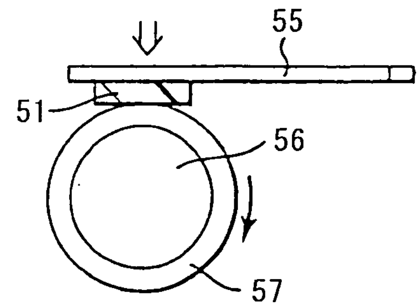


FIG. 6

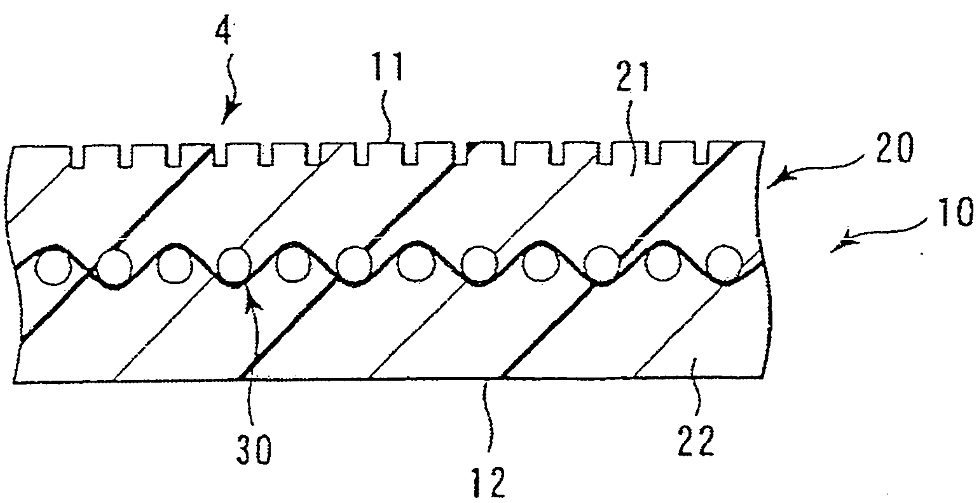

European Patent Office

# EUROPEAN SEARCH REPORT

Application Number
EP 05 00 4917

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | WO 02/04536 A (UNIROYAL CHEMICAL COMPANY, INC) 17 January 2002 (2002-01-17) | 1,2 | C08G18/10<br>C08G18/42<br>D21F3/02 |
| Y | * page 6, line 23 - page 8, line 9 * | 3-6 | |
| | * page 19, line 6 - page 20, line 6 * | | |
| Y | * page 20, line 20 - page 21, line 10 * | 3-6 | |
| Y | * page 27, line 10 - page 28, line 22 * | 3-6 | |
| Y | * tables 3-D *<br>----- | 3-6 | |
| A | GB 820 005 A (UNITED STATES RUBBER COMPANY) 16 September 1959 (1959-09-16)<br>* page 4, line 48 - line 84 *<br>* example 6B; table 6 *<br>* page 12, line 32 - line 47 *<br>----- | 1-6 | |
| Y | US 5 507 899 A (WATANABE ET AL) 16 April 1996 (1996-04-16)<br>* column 2, line 65 - column 3, line 60; claim 1; examples 1,2 *<br>----- | 3-6 | |

TECHNICAL FIELDS SEARCHED (Int.Cl.7)

C08G
D21F

The present search report has been drawn up for all claims

2

| Place of search | Date of completion of the search | Examiner |
|---|---|---|
| Munich | 30 June 2005 | Neugebauer, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 00 4917

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2005

| Patent document cited in search report | Publication date | Patent family member(s) | Publication date |
|---|---|---|---|
| WO 0204536 A | 17-01-2002 | WO 0204536 A2 | 17-01-2002 |
| | | US 2003225240 A1 | 04-12-2003 |
| GB 820005 A | 16-09-1959 | DE 1102385 B | 16-03-1961 |
| | | DE 1085671 B | |
| | | FR 1176377 A | 09-04-1959 |
| | | FR 1179367 A | 22-05-1959 |
| | | GB 820004 A | 16-09-1959 |
| | | US 3457326 A | 22-07-1969 |
| US 5507899 A | 16-04-1996 | JP 6287885 A | 11-10-1994 |
| | | AT 150816 T | 15-04-1997 |
| | | AU 652818 B2 | 08-09-1994 |
| | | AU 1482892 A | 22-10-1992 |
| | | AU 658808 B2 | 27-04-1995 |
| | | AU 6345594 A | 21-07-1994 |
| | | CA 2065903 A1 | 16-10-1992 |
| | | DE 69218485 D1 | 30-04-1997 |
| | | DE 69218485 T2 | 23-10-1997 |
| | | DK 509460 T3 | 21-07-1997 |
| | | EP 0509460 A1 | 21-10-1992 |
| | | FI 921672 A | 16-10-1992 |
| | | NO 921470 A | 16-10-1992 |
| | | NZ 242337 A | 25-02-1994 |
| | | US 6337112 B1 | 08-01-2002 |

EPO FORM P0459

For more details about this annex : see Official Journal of the European Patent Office, No. 12/82